# EUROPEAN PATENT SPECIFICATION

(11) **EP 0 308 109 B1**
(45) Date of publication and mention of the grant of the patent: **14.09.1994**
(21) Application number: 88308120.0
(22) Date of filing: 01.09.1988
(51) Int. Cl.: C08G 61/12, H01B 1/12

(54) **Electrically conductive polymer compositions, processes and polymers useful for preparing the polymer compositions**
Elektrische leitfähige Polymerzusammensetzungen für die Herstellung dieser Zusammensetzungen verwendbare Verfahren und Polymere
Compositions de polymères conducteurs électriques procédés et polymères utilisables pour la préparation de ces compositions de polymères

(30) Priority: 16.09.1987 GB 8721750
(43) Date of publication of application: 22.03.1989
(73) Proprietor: THE DOW CHEMICAL COMPANY, Midland Michigan 48640-1967 (US)
(72) Inventor: Eiffler, Jurgen, D-2160 Stade (DE)
(74) Representative: Raynor, John

(56) References cited:
- EP-A- 0 104 726
- WO-A-85/05728
- US-A- 4 604 427
- US-A- 4 617 353

## Description

Electrically conductive polymers are the focus of considerable interest as they are possible replacements for metallic conductors or semi-conductors in a wide variety of applications such as in batteries, in photovoltaics, and in electrostatic dissipation and electromagnetic shielding uses.

It is well known that conductive polymers such as polypyrrole can be synthesized through electro-chemical oxidative polymerization of pyrrole (A.F. Diaz et al., J.C.S., Chem. Comm., 1979, pages 635 and 636). Unfortunately, the mechanical properties of the produced polypyrrole coatings or films are often unsatisfactory unless special care is taken to chose the proper type of solvents or conducting salts such as aromatic sulfonic, disulfonic or oligosulfonic acids disclosed in DE-A-34 21 296 and DE-A-33 18 857.

EP-A-0 104 726 refers to conductive polymers (e.g. pyrrole or aniline) which are stabilized with polymeric dopants such as polysulphonate or sulphonated styrene-butadiene-copolymer.

It is also known that pyrrole can be polymerized chemically, for example with potassium peroxydisulphate, potassium permanganate, sodium perborate or potassium bichromate in the absence or presence of a conducting salt, (K.C. Khulbe and R.S. Mann, Journal of Polymer Science, Vol. 20, pages 1089 ff., 1982 and DE-A-3325892). From DE-A-3307954 it is known that electrically conductive pyrrole polymers having small particle sizes can be obtained by polymerizing pyrrole in the presence of carriers of small size. However, it is often desirable to produce films or coatings from the powdery pyrrole polymers. DE-A-3227914 discloses pressing pyrrole polymers at a temperature between 150°C and 300°C and a pressure of at least 50 bar; however, this method is rather inconvenient for preparing films or coatings.

Accordingly, others have suggested preparing composite films of polypyrrole and PVC, polyimides, polystyrenes and polymethacrylates (O. Niwa et al., J. Chem. Soc., Chem. Commun., 1984 pages 817 and 818; M.-A. De Paoli et al., J. Chem. Soc., Chem. Commun., 1984 pages 1015 and 1016 and EP-A-191726). In Chemical Abstracts 106 (2):6150c providing an abstract of JP61/123638 it is suggested to soak a PVC film containing aniline with an ammonium persulphate solution. However, these methods are quite complicated and time consuming.

DE-A-3419788 discloses electrically conductive copolymers and blends of polymers which are composed of a polymer component A without a conjugated pi-system and a polymer component B with a conjugated pi-system such as polypyrrole, polythiophene or polyaniline. The disclosed examples of component A are polyvinylchloride (PVC), polybutadiene, polyacrylate, polymethacrylate, copolymers of maleic acid anhydride and styrene, copolymers of butadiene and styrene, chloromethylated polystyrene or polymers which are functionalized with a -NH₂ or -OH group such as poly-(p-aminostyrene) or polyvinylamine which contain redox-active groups which have in the oxidized or reduced state an active potential which is sufficient for oxidation or reduction of component B. As redox-active groups are disclosed complexes or chelates of transition metals, benzoquinone or ferrocene. Unfortunately, the polymer component A has to be functionalized in several steps in order to incorporate the redox-active groups.

U.S. Patent 4,604,427 discloses a method of impregnating a non-porous, swellable or soluble polyamide, polyvinyl chloride, polycarbonate, polyvinyl acetate or polyurethane with pyrrole or aniline and with a chemical oxidant such as ammonium persulphate or iron trichloride. Powders or films are obtained. U.S. Patent 4,617,353 discloses a process wherein a solution of an electrically non-conducting polymer such as PVC, butadiene copolymers and olefin-homo- and copolymers is formed in a nonhydrous liquid reaction medium and a pyrrole monomer is contacted in situ with a polymerization initiator selected from the group consisting of anhydrous halides of iron, cobalt or nickel. R. Yosomiya, Makromol. Chem., Rapid Commun. 7, pages 697 to 701 (1986) discloses that poly(vinyl alcohol), poly(methyl methacrylate) and poly(vinyl chloride) are dissolved in an appropriate solvent together with CuCl₂ or FeCl₃, the solution is cast on a glass plate and dried to form a film which is then reacted with pyrrole.

Unfortunately, the oxidant or polymerization initiator is distributed inhomogeneously in the films prepared according to these processes and the mechanical properties of the films are often insufficient.

P. Aldebert et al., J. Chem. Soc., Chem Commun., 1986, pages 1636 to 1638 disclose polymer alloys with mixed electronic and ionic conductivity which have been synthesized from perfluorosulphonated ionomer membranes and monomer precursors of electronically conducting polypyrrole or polyaniline. A commercially available solid acidic Nafion (Trademark) film is soaked in an aqueous solution containing 2M Fe(ClO₄)₃ and 0.5 M HClO₄. The proton sites of the Nafion film are exchanged by iron(III) ions. The Nafion film is produced from an ionomeric polymer containing SO₃ group. Polymerization of aniline inside the ionic membrane is obtained by soaking the Fe³⁺ exchanged Nafion in a 1M aqueous solution of aniline acidified with H₂SO₄ or HClO₄.

Due to the limited use of pyrrole polymers in or on matrix polymers in powder form and the limited choice between matrix polymers and processes which are useful for producing electrically conductive pyrrole or aniline polymers in the form of a film or coating, it remains desirable to provide a new electrically conductive polymer composition comprising polypyrrole, polythiophene, polyaniline or similar polymers which polymer composition can be produced in the form of a film or a coating. Furthermore, it remains desirable to provide a new matrix polymer and a new process useful for producing such electrically conductive polymer composition.

Surprisingly, it has been found that certain types of polymer are useful for producing such electrically conductive polymer compositions.

Accordingly, one aspect of the present invention is an electrically conductive polymer composition of a polymer a) comprising one or more aromatic compounds in polymerized form and
a polymer containing ionic groups,
characterized in that it is producible by oxidative polymerization of the said aromatic compounds in the presence of a polymer b) containing a polydentate anionic complex which has a redox potential sufficient for enabling oxidative polymerization of the said aromatic compounds.

A further aspect of the present invention is a process for preparing an electrically conductive polymer composition which process comprises polymerizing one or more aromatic compounds in the presence of a polymer containing a polydentate anionic complex having a redox potential sufficient for enabling oxidative polymerization of the aromatic compound.

Another aspect of the present invention is a process for preparing an electrically conductive polymer composition which process comprises polymerizing one or more aromatic compounds in the presence of an oxidizing agent containing a polydentate anionic complex having redox potential sufficient for enabling oxidative polymerization of the aromatic compound, and in the presence of a polymer containing anions which are spontaneously exchangeable with the polydentate anionic complexes in the oxidizing agent and before or during oxidative polymerization of the aromatic compound the anions in the polymer are at least partially exchanged with the polydentate anionic complex of the oxidating agent whereby a polymer containing the polydentate anionic complex is produced.

Still another aspect of the present invention is the use of such an electrically conductive polymer composition as an electrical conductor or semi-conductor, as an electrode material, for example in a rechargable battery or in an electroplating process, in solar cells, for antistatic finishing of plastics, or paper, as an electromagnetic shielding material, as an electrochemical membrane, in a heating film, for capacitive scanning or in a fuel cell.

Still another aspect of the present invention is a polymer which is cross-linked via polydentate, anionic non-metallic complexes which have a redox potential sufficient for enabling oxidative polymerization of aromatic compounds.

The electrically conductive polymer composition of the present invention is basically produced by oxidative polymerization of a homo- or copolymer a) of one or more substituted pyrroles, unsubstituted pyrrole, substituted thiophenes, unsubstituted thiophene, substituted anilines and/or unsubstituted aniline in the presence of a polymer b) containing ammonium, phosphonium or sulphonium groups in the polymer chain(s) and a polydentate anionic complex which has a redox potential sufficient for enabling oxidative polymerization of said pyrrole(s), thiophene(s) and/or aniline(s).

Polymer b) is described in the following paragraphs in detail. The polydentate anionic complexes which have a redox potential sufficient for enabling oxidative polymerization of the aromatic compounds may be metallic complexes such as MnO₄⁻, Cr₂O₇²⁻ or [Fe(CN)₆]³⁻. However, non-metallic complexes are preferred, typically those wherein the following elements are the main elements of the complex: elements of group IIIA, such as boron, of group VA, such as nitrogen or phosphorous, or of group VIA, such as oxygen or sulfur, of the Periodic Table of Elements. Exemplary thereof are S₂O₈²⁻, B₄O₇²⁻ and ClO₄⁻ , the first two being more preferred complexes, with S₂O₈²⁻ being the most preferred one.

The non-metallic polydentate anionic complexes are preferred over the polydentate anionic metal complexes. For example, unlike complexes containing heavy metal ions, they are not subject to ecological discussions.

Polymers cross-linked with polydentate, anionic metallic complexes are known. From E.A. Bekturov, "Interaction of poly(diallyldimethylammoniumchloride) with ferro- and ferricyanide anions", Macromol.Chem. 186/71-75(1986) and DD-A-147 949 it is known to react poly(diallyldialkylammoniumchloride) with metallic complexes such as MnO₄- or Fe(CN)₆³⁻. In DD-A-147 949 it is suggested to make use of this reaction in waste water treatment. However, the usefulness of such polymers cross-linked with polydentate, anionic metal complexes for preparing the electrically conductive polymer compositions of the present invention is not known.

The standard half cell potential of the polydentate anionic redox system is preferably more than +0.1 Volt, more preferably more than +0.8 Volt, most preferably more than +1.2 Volt, depending on the type of the monomeric precursors of polymer a). It is important that the anion not only has a redox potential sufficient for enabling oxidative polymerization of the monomeric precursor(s) of polymer a) but that it is also a polydentate complex. The expression "polydentate complexes" includes bidentate, tridentate, etc. complexes. The anionic complexes are mono- or polyvalent, preferably mono- to trivalent, more preferably divalent. Most preferably, polymer b) contains anionic polynuclear complexes which contain several coordination centers linked together with bridge ligands or metal to metal bonds. The polymer b) is obtainable in the form of a film or a coating if it contains these polydentate anionic complexes. Without wanting to be bound to a particular theory, it is believed that the polydentate anionic complexes cause cross-linking of the polymer whereby films or coatings are obtained.

Those polymers b) which are cross-linked via the above mentioned non-metallic complexes such as S₂O₈²⁻ or B₄O₇²⁻ are novel.

The polymer of the present invention and polymer b) preferably have phosphonium or sulphonium groups and more preferably ammonium groups in the polymer chain(s). Polymers c) which have such groups but which contain monodentate anions such as hydroxyl or chloride and which polymers are linear are disclosed in British Patent Specification 1,084,540. The examples of the groups given therein are incorporated herein by reference. Preferred groups are 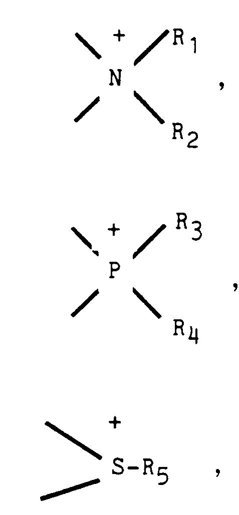
wherein R₁ and R₂ are independently hydrogen, alkyl, aralkyl or phenyl or wherein R₁ and R₂ are joined together to represent the atoms required to complete a heterocyclic ring such as piperidine, pyrrolidine, or morpholine, e.g.

-(CH₂)₅-, -(CH₂)₄-,

or -(CH₂)₂O(CH₂)₂-

and wherein R₃ and R₄ are independently alkyl, monocyclic aryl or monocyclic aryl-alkyl, and wherein R₅ is alkyl or monocyclic aryl-alkyl.

The above noted phosphonium, sulphonium and ammonium groups are a part of the polymer chain.

The more preferred cross-linked polymers of the present invention are homo- or copolymers produced from one or more monomers of Formula I 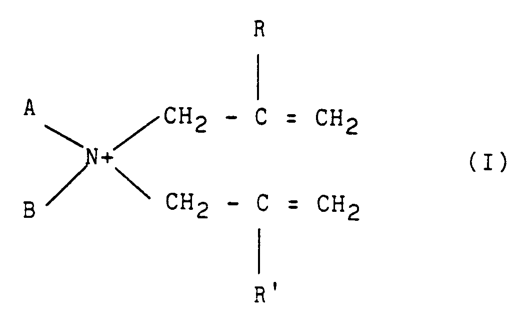
wherein
A and B are the same or different and represent an alkyl or phenyl radical, the alkyl or phenyl radical can be unsubstituted or substituted with a substituent which is not polymerizable in the presence of a free radical initiator;
or A and B together represent -CH₂-CH₂-, -CH(CH₃)-CH(CH₃)-, -CH=CH-CH=CH-, -CH=CH-CH=N-,
or
-CH=CH-N=CH-; and
R and R′ are the same or different and represent an atom or group which is non-polymerizing
and which polymers are cross-linked via polydentate, anionic, non-metallic complexes which have a redox potential sufficient for enabling oxidative polymerization of aromatic compounds, preferably via S₂O₈²⁻ or B₄O₇²⁻ ions.

Preferred substituted alkyl or phenyl radicals A or B each independently are substituted by hydroxy, amido, carboloweralkoxy, loweralkoxy, phenoxy, naphthoxy, cyano, thioloweralkoxy, thiophenoxy, loweralkoyl, 5- or 6- membered cycloalkyl, or represent a nitro substituted alkyl group.

Suitable R and R′ groups independently are hydrogen, alkyl or phenyl radicals, the alkyl or phenyl radicals are optionally substituted by hydroxy, amido, carboloweralkoxy, loweralkoxy, phenoxy, naphthoxy, cyano, thioloweralkoxy, thiophenoxy, loweralkoyl, 5- or 6-membered cycloalkyl, or a nitro substituted alkyl group.

"Lower" alkyl or alkoxy means alkyl or alkoxy groups having from 1 to 9 carbon atoms.

Preferably, the alkyl groups A and B when they are substituted, each independently represent beta-propionamido, C₂₋₈-hydroxyalkyl, C₁₋₁₈-alkoxyalkyl or aralkyl groups; benzyl, hydroxymethyl, hydroxyethyl or ethoxyethyl groups are particularly preferred.

Preferably, the alkyl groups A and B each independently have 1 to 18, more preferably 1 to 12, most preferably 1 to 8 carbon atoms, such as, for example, methyl, ethyl, propyl, isopropyl, n-, s- or t-butyl, pentyl, 2-ethyl hexyl, octyl, dodecyl or octadecyl groups.

Preferably R and R′ each independently represent C₁₋₆-alkyl, more preferably methyl or ethyl, or hydrogen. The most preferred cross-linked polymers of the present invention and polymer b) respectively are homo- or copolymers of one or more monomers of formula I wherein A and B each independently represent methyl, ethyl or unsubstituted phenyl, preferably methyl; and R and R′ are independently hydrogen or methyl, and which polymers are cross-linked with S₂O₈²⁻ anions.

Further useful polymers of the present invention are homo- or copolymers of one or more monomers of formula II 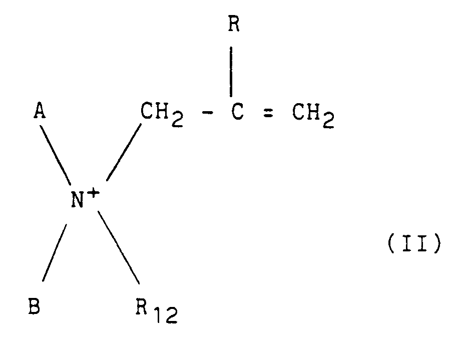
which polymers are cross-linked with anions of the above mentioned types, and A, B and R have the above-mentioned meanings and
R₁₂ represents hydrogen or has one of the meanings stated for A.

The monomers of formula I or II can also be copolymerized with any other monomer copolymerizable therewith, for example with a monomer of formula III 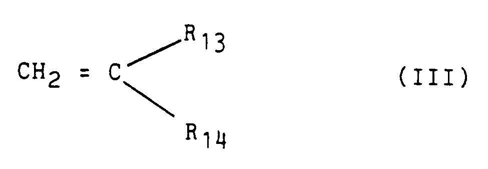
wherein R₁₃ represents hydrogen, halogen, an alkyl, cycloalkyl, aryl, alkaryl or aralkyl radical, and R₁₄ represents an aryl or alkaryl radical or a radical represented by the formula
(a) -C ≡ N
(b) 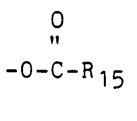
(c) 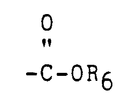
(d) 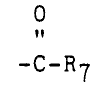
(e) 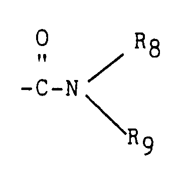
(f) -OR₁₀
where R₁₅ and R₆ each independently represent an alkyl, cycloalkyl or alkoxyalkyl radical; R₇ has the same meaning as previously given for R₁₅ and R₆ and, in addition, can be an aryl radical, R₈ and R₉ each independently represent hydrogen, an alkyl, cycloalkyl, aryl, alkaryl, aralkyl or alkoxyalkyl radical; and R₁₀ has the same meaning as previously given for R₁₅ and R₆.

Preferred monomers of formula III are acrylonitrile, styrene, acrylamide and vinyl acetate.

The polymers b) can be prepared from known polymers c) which typically contain halogen type anions by exchanging these anions with polydentate anionic complexes having the desired redox potential such as S₂O₈²⁻, Cr₂O₇²⁻, B₄O₇²⁻, MnO₄⁻ or [Fe(CN)₆]³⁻ and cross-linking the polymer. The anion exchange however does not occur when the polydentate anionic complexes such as S₂O₈²⁻ are contacted with a monomeric precursor of polymer b). The polymer c) used for preparing polymer b) by anion exchange and cross-linking preferably has an average molecular weight of at least 20,000, more preferably more than 50,000 and most preferably from 200,000 to 5,000,000. Known polymers c) which are useful for preparing the cross-linked polymer b) are for example poly(ionenes) such as poly(dimethyl-ammoniono)-1,6-hexylene bromide, poly(2-acryloxyethyl-dimethylsulfonium chloride), poly(glycidyltributyl phosphonium chloride), poly(acryloxyethyl trimethyl ammonium chloride), poly(methacryloxyethyl trimethyl ammonium chloride), poly(vinyl benzyltri-methyl ammonium chloride), poly-(methyl(vinyl pyridinium)ammonium chloride), poly(3-methacryloxyl (2-hydroxy propyl) trimethyl ammonium chloride), poly(3-acrylamido-3-methyl butyl trimethyl ammonium chloride), poly(alpha-(methylene trimethyl ammonium chloride)-ethylene oxide), poly(dimethyl propyl ammonium chloride), quaternized poly(2- or 4-vinylpyridine), quaternized polyethyleneimine, poly(vinyl methyl pyridinium chloride) or quaternized poly(dimethyl-aminoethyl methacrylate) or copolymers of the monomeric precursors of the above-mentioned polymers with vinyl monomers, in particular copolymers of vinylpyridine/styrene, vinylpyridine/butadiene, vinylpyridine/styrene/butadiene-terpolymers, the vinylpyridine-moities being converted into their salt form by treatment with acids, preferably inorganic acids or being in their quaternized form. Terpolymers having poly (vinylbenzyltrimethyl ammoniumchloride)/styrene/butadiene units or terpolymers having poly(acryloxethyltrimethyl ammoniumchloride) or poly(methacryloxyethyltrimethyl ammoniumchloride) units instead of poly(vinylbenzyltrimethyl ammoniumchloride) are also useful. The most preferred copolymers or terpolymers are those having the moities such as the quaternized vinylpyridine or vinylbenzyltrimethyl ammoniumchloride in an amount of 1 to 50 percent and butadiene in an amount of 20 to 70 percent, based on the polymer weight, any remaining polymer portion being copolymerized styrene. Mixtures of a polymer c), preferably of a poly (diallyldialkyl ammoniumhalide) with a polymer dispersion are also useful for preparing the electrically conductive polymer composition of the present invention and are also included in the definition of "the polymer c)". Preferred polymer dispersions are known aqueous dispersions of the polystyrene, polystyrene/butadiene or carboxylated polystyrene/butadiene type which are generally known as adhesives or pigment binders. The mixtures preferably contain from 1 to 50 percent, more preferably from 10 to 40 weight percent of the polymer c).

The polymers c) having cationic groups of the type disclosed above with respect to polymers b) and having anions selected from halogen such as bromide, fluoride and chloride ions, tetrafluoroborate, phosphate, nitrate, sulphate, HSO₄⁻ or organic anions, such as acetate or the anion of benzene sulphonic acid or p-styrene sulphonic acid or other monodentate anions are known in the art. The polymers c) are for example described in U.S. Patents 2,923,701, in British patent 1,037,028, in U.S. Patent 3,968,037 and in Belgium patent 664427. These known polymers are typically linear and usually soluble or swellabe in water to a substantial extent. They can be produced according to known polymerization processes in aqueous solution or according to emulsion or suspension polymerization. Solution polymerization is described in U.S. Patent 3,288,770. Emulsion polymerization and suspension polymerization are described in U.S. Patents 3,284,393 and 2,982,749. From published Dutch patent application 6505750 radical-type polymerization of diallyldimethylammonium chloride in the presence of a persulphate catalyst is known. However, the radical-type polymerization does not provide cross-linked polymers containing persulphate anions.

As mentioned above, the polymers c) are preferably linear. However, it is also possible to start from known polymers of the above mentioned types which have been cross-linked with difunctional or trifunctional non-ionic monomers, for example diallylamine, triallylamine, divinylpyridine, ethylene glycol diacrylate, divinylbenzene, diallylphthalate, diallylfumarate or trivinylbenzene. These products can be slightly cross-linked and still substantially water-soluble or they can be highly cross-linked and used in the form of a gel for preparing polymers b). The polymers c) can contain up to 15 weight percent of the monomeric precursor. However polymers c) preferably contain less than 5 weight percent, more preferably less than 0.2 weight percent, monomer.

A suitable polymer b) containing polydentate anionic complexes can be produced by exchanging at least a portion of the anions in a known polymer c) described above with the polydentate anionic complexes described above, S₂O₈²⁻ being the most preferred one. The following description of the preparation of polymer b) and the cross-linked polymer of the present invention respectively is illustrated using the S₂O₈²⁻ (peroxodisulphate) anion although the useful types of anions are not restricted thereto.

For the ionic cross-linking with peroxodisulphate, solutions of peroxodisulphuric acid or its ammonium, alkali or alkaline earth metal salts, for example the tetrabutylammonium, sodium or potassium salts, are for example useful. The acid or the salt may be dissolved in organic solvents but an aqueous solution is preferred. When the polydentate anionic complex is a permanganate anion, for example in the form of an aqueous potassium permanganate solution, such aqueous solutions preferably contain traces of an acid.

Aqueous solutions containing the peroxodisulphate ion are preferably highly concentrated, depending on the type of salt used. In general, concentrations from 0.1 weight percent up to saturated solutions of the salt are useful. For example, a 5 to 20 weight percent aqueous solution of Na₂S₂O₈ is preferred. Polymer c) can be dissolved in an organic solvent but aqueous solvents are preferred.

In a first method A for producing a polymer of the present invention, a solution of an above mentioned known polymer c) which typically contains monodentate anions such as halogen, preferably chlorine, is applied to a substrate such as a glass plate. Aqueous solutions which contain from 0.1 to 25 weight percent of polymer c), more preferably from 1 to 20 weight percent of polymer c), most preferably from 1 to 10 weight percent of polymer c) are preferred. Solutions of polymer c) in an organic solvent are less preferred. The polymer solution and the substrate are then dipped into an above described solution which contains peroxodisulphate ions. The polymer solution can, for example, simply be poured on a glass plate which is then dipped into the solution containing peroxodisulphate ions. The anion exchange between the monodentate anion, such as chloride, and the peroxodisulphate ion and the cross-linking usually take place within a couple of minutes. The polymer of the present invention is deposited on the substrate in the form of a solid, water-insoluble film.

In a further method B, a film produced from a known above described polymer c) is dipped into the above described solution containing peroxodisulphate ions. The film of the polymer c) can be produced by evaporating corresponding polymer solutions which are preferably in contact with a substrate such as a glass plate. This method is particularly useful employing the above mentioned cross-linked polymeric starting materials c). The ion exchange and cross-linking reaction typically takes up to about two hours for films having a thickness of up to about 0.5 mm.

Films of polymer b) and of the polymer of the present invention respectively can also be produced according to a process C which is analogous to the process described in U.S. Patent 3,276,598. In this process aqueous solutions of the polymeric starting material c) and of the peroxodisulphate ion are placed in two chambers which are separated from each other with a filter paper or another material having fine pores. This method is particularly suitable for producing very thin films of less than 0.1 mm. Solutions containing from 0.1 to 25, more preferably from 0.5 to 5 weight percent of polymer c) and solutions containing from 0.1 to 70, more preferably from 1 to 20 weight percent of a peroxodisulphate salt are preferred.

In a further method D, the above mentioned film of the known polymer c) is sprayed with the above described aqueous solutions containing peroxodisulphate ions.

In a further method E, a solution of the known polymer c) is added drop-wise to the peroxodisulphate solution. The polymeric solution contains preferably from 0.1 to 25 weight percent, more preferably from 0.5 to 10 weight percent of polymer c). The peroxodisulphate solution comprises preferably from 0.1 to 70 weight percent, more preferably from 0.5 to 20 weight percent of a peroxodisulphate salt. Granules are obtained which can be ground to a powder if desired.

A further method F involves suspending a known solid polymer c) in a peroxodisulphate solution. This method is particularly useful for polymers produced according to suspension polymerization and for polymers which have been cross-linked with a multivalent non-ionic monomer of the above mentioned type.

According to the above described methods A to F, polymers b) are obtained in which more than 50 percent, preferably more than 80 percent and more preferably more than 95 percent of the total anion content are the above described polydentate anionic complexes depending, among others, on the concentration of the salt solutions comprising these anions in methods A to F. The production of the polymers b) according to methods A to F can for example be carried out at a temperature between 15°C and 40°C, preferably at ambient temperature.

In some cases it is useful to carry out the process for producing the polymer of the present invention in an aqueous solution wherein conducting salts are dissolved. Conducting salts are generally known. Preferred salts are alkali or ammonium salts which have anions of the following type: BF₄⁻, PF₆⁻, AsF₆⁻, SbC1₆⁻, C10₄⁻, IO₄⁻, HSO₄⁻, SO₄²⁻, CF₃SO₃⁻, CH₃C₆H₄SO₃⁻, CF₃COO⁻, HC₂O₄⁻, ZrF₆²⁻, TiF₆²⁻, alkylsulfate, alkylsulfonate, alkylphosphate or alkylphosphonate.

The aqueous solution preferably contains the conducting salt in an amount of from 0.001 to 10 mols per litre, more preferably from 0.01 to 1 mol per litre. Preferred cations are sodium, potassium, ammonium or tetrabutylammonium ions. Instead of the salts, acids such as sulphuric acid are also useful. A preferred type of aqueous solution are mixtures of water and methanol containing the above mentioned salts.

The above described polymers b) and the cross-linked polymers of the present invention are useful for preparing electrically conductive polymer compositions of the present invention as described below.

Typical examples of a polymer a) having one or more aromatic compounds in polymerized form are polymers containing aromatic rings, furane, aniline, pyrrole and/or thiophene units, substituted or non-substituted polypyrroles, substituted or non-substituted polythiophenes, substituted or non-substituted polyanilines or substituted or non-substituted polyphenylenes. The polyanilines and in particular the polypyrroles are preferred. The expression polypyrrole used herein means homo- or copolymers of pyrrole and/or substituted pyrrole or copolymers of pyrrole and heteroaromatic compounds having rings of 5 or 6 members.

Preferred pyrroles which can be polymerized according to oxidative polymerization are represented by formula IV. 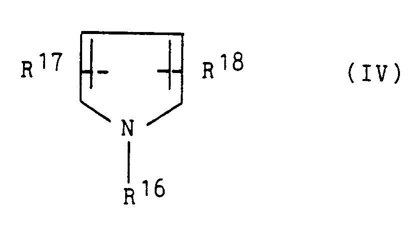
wherein
R¹⁶ is alkyl, cycloalkyl, aryl, aralkyl, or alkaryl, which groups are optionally substituted by -COR²⁰, -COOR²⁰ -SO₂R²⁰, -SO₃R²⁰, -PO₃R²⁰R²¹, -PO₂R²⁰, -NR²⁰R²¹, -OR²⁰, -SR²⁰, -CN or -SiR²⁰R²³R²⁴, or R¹⁶ is hydrogen, -CN, -SO₂R²⁰, -SO₃R²⁰, -COR²⁰, -PO₂R²⁰ or -Si(R²²)₃;
R²⁰ and R²¹ independently represent hydrogen, alkyl, aryl or aralkyl;
R²², R²³ and R²⁴ independently represent alkyl or phenyl;
R¹⁷ and R¹⁸ independently represent hydrogen, alkyl, cycloalkyl, aryl, aralkyl, alkaryl, -COR¹⁹, -CN or halogen; and
R¹⁹ is hydrogen, alkyl or aryl.

Among the alkyl radicals, C₁-C₂₀ -alkyl are preferred, such as methyl, ethyl, propyl, butyl, cetyl, lauryl or stearyl groups. Methyl is the most preferred alkyl radical.

Among the cycloalkyl radicals, C₅-C₇-cycloalkyl are preferred, that is cyclopentyl, cyclohexyl or cycloheptyl, of which cyclohexyl is the most preferred.

Preferred halogen radicals are bromine and chlorine. Aryl radicals preferably represent phenyl or naphthyl, most preferably phenyl.

Aralkyl preferably represents a C₇-C₁₄-aralkyl, most preferably benzyl.

Substituted groups are preferably mono- or disubstituted, most preferably mono-substituted. Pyrroles which are substituted at the aromatic ring are preferably substituted in the 3- and/or 4-position.

Preferred pyrroles are the unsubstituted pyrrole, the N-alkylpyrroles, in particular the N-methylpyrrole, or the N-arylpyrroles, in particular the N-phenylpyrrole as well as the pyrroles which are substituted at the aromatic ring with one or two alkyl groups, preferably methyl groups or one or two halogen radicals, preferably bromine or chlorine.

The optionally substituted pyrroles can be copolymerized with other heteroaromatic compounds, preferably with furane, thiophene, thiazole, oxazole, thiadiazole, imidazole, pyridine, 3,5-dimethylpyridine, pyrazine, pyridazine, 3,5-dimethylpyrazine, carbazole or phenothiazine.

The most preferred pyrrole copolymers are those produced from unsubstituted pyrrole and optionally substituted N-methylpyrrole and copolymers produced from unsubstituted pyrrole or N-methylpyrrole and furane or thiophene. These pyrrole copolymers contain preferably from 0.1 to 10 mol percent of the aforementioned other heteroaromatic compounds, based on the amount of pyrrole. The most preferred polypyrrole is a homopolymer of unsubstituted pyrrole.

"Polyaniline" includes homo- or copolymers of aniline and/or substituted aniline or copolymers of aniline and/or substituted aniline with heteroaromatic compounds having five our six members in the aromatic ring. Preferred monomers for producing a polyaniline are unsubstituted aniline, N-methylaniline, 2-methylaniline, 3-methylaniline and N-phenyl-1,4-diaminobenzene. A homopolymer of unsubstituted aniline is preferred.

The process of preparing an electrical conductive polymer composition of the present invention is described below using poly(diallyldimethylammonium-peroxodisulphate) as polymer b) and unsubstituted pyrrole as the monomeric precursor of polymer a) although the process is not restricted thereto.

The electrically conductive polymer compositions can be prepared by contacting poly(diallyldimethylammonium-peroxodisulphate), hereafter "poly-DDAP" in the form of granules or a powder or preferably as a film prepared according to the methods A) to F) described above with
I) liquid pyrrole or with a solution of pyrrole in an aqueous or organic solvent or
II) with pyrrole in the gas phase.

It is advisable to use a molar excess of pyrrole compared to the amount of poly-DDAP used.

In process I) pyrrole can be dissolved in water or aqueous methanol in an amount of from 0.1 to 50, preferably of from 1 to 10 weight percent, based on the weight of aqueous methanol. Preferably pyrrole is dissolved in an inert organic solvent such as propylenecarbonate, acetonitrile, a halogenated hydrocarbon such as methylene chloride or a hydrocarbon such as pentane, hexane or cyclohexane in an amount of from 0.1 to 50 weight percent, preferably from 1 to 10 weight percent, based on the weight of the organic solvent. Preferably, the reaction is performed at a temperature of between 15 and 40°C, more preferably at about ambient temperature. The reaction is spontaneous and is generally completed within about two hours, depending on the thickness of the poly-DDAP film or the particle size of the poly-DDAP granules or powders. Electrically conductive polymer compositions of the present invention in granular or powder form are obtained when contacting granules or powdery poly-DDAP produced according to methods E) and F) described above. The granules or powders obtained are washed, for example with methanol, and dried. The electrically conductive polymer compositions of the present invention can be used in powder or granular form for some applications or they can be pressed to solid articles such as films, at a temperature between 150°C and 300°C and pressures of more than 50 bar according to the method disclosed in DE-A-3227914.

However, it is preferred to contact poly-DDAP in the form of a coating or a film, which has for example been prepared according to method A), B), C) or D) described above with pyrrole which is preferably dissolved in a solvent as described above. A substantial advantage of this embodiment of the present invention is that a further step for producing coatings or films as described in DE-A-3227914 can be avoided.

The films or coatings produced from poly-DDAP and pyrrole are obtained in the form of black films or coatings when using poly-DDAP in the form of a film or a coating as a starting material. After having washed the film, for example with methanol and afterwards with water, and after drying, the film-type polymer composition obtained is highly scratch resistent and has good adhesion to substrates such as glass, metal, paper or plastics. Accordingly, the polymer composition is particularly useful as a coating. It is preferred to use poly-DDAP as a coating on a substrate which has been produced according to method A) described above for producing these types of electrically conductive polymer compositions. Conductivity measurements of polymer compositions prepared from poly-DDAP and pyrrole have shown conductivities between 10⁻⁶ and 10⁻⁷ S/cm. Coatings of poly-DDAP have an electrical conductivity of about 10⁻¹⁴ S/cm or less when poly-DDAP is dry.

Granules or powders, preferably coatings or films with increased conductivity can be obtained if conducting salts are added to pyrrole or to the above mentioned aqueous or organic solutions. Preferred conducting salts are those which have been previously mentioned above. Inorganic salts in aqueous methanol are preferred. The volume ratio between water and methanol is in general from 0.1:1 to 10:1, preferably from 0.5:1 to 2:1. If an organic solvent is used for dissolving pyrrole then organic conducting salts such as alkali and ammonium salts of n-dodecylsulphate, aromatic sulphonic acids, phthalocyanine sulphonic acids, polystyrene sulphonic acids, campher sulphonic acid, styrene sulphonic acid, vinyl sulphonic acid, long chain fatty acids or benzene sulfonic acid are preferably used therewith. These organic conducting salts are soluble in organic solvents such as acetonitrile, methylene chloride or propylene carbonate. The organic solvents or aqueous solvents for the conducting salts such as aqueous methanol may be mixed with the above mentioned solvents for pyrrole. The molar ratio between pyrrole and the conducting salt is preferably from 3:1 to 20:1, more preferably from 3:1 to 10:1. Electrically conductive polymer compositions produced from poly-DDAP and pyrrole having an electrical conductivity between about 10⁻² and 10⁻⁴ S/cm are obtainable when using conducting salts. The process for producing electrically conducting polymer compositions in the presence of conducting salts is particularly suitable for producing self-supporting films. In preparing a self-supporting electrically conductive polymer composition, it is preferred to start from a self- supporting poly-DDAP film produced according to method B) or D) described above, most preferably according to method B) in which an above mentioned slightly cross-linked polymeric starting material c) has been used for preparing the poly-DDAP film.

Instead of polymerizing pyrrole in the presence of polymer b) and a conducting salt, it is also possible to produce polymer b), such as poly-DDAP, in the presence of a conducting salt as described above and then polymerizing pyrrole in the absence of a conducting salt. According to both methods, polymer compositions are obtainable which have an electrical conductivity of up to 10⁻² to 10⁻⁴ S/cm.

It has been found that coatings or, preferably, self-supporting films of the electrically conductive polymer composition with even higher electrical conductivities are obtained when a poly-DDAP film is used as an anode which is connected with a cathode such as a platinum electrode. Both electrodes are contacted with an electrolyte which preferably is an above mentioned organic solvent, optionally mixed with water, containing an above mentioned conducting salt and pyrrole. Pyrrole and the conducting salt(s) are generally present in the elctrolyte in molar concentrations of from 0.001 to 5. When pyrrole is used as a monomeric precursor of polymer a), generally an initial potential of 1 to 100 volts, preferably of 1 to 50 volts and most preferably of 2 to 25 volts is applied between the anode and the cathode. According to this method polymer films are obtainable which have an electrical conductivity of more than 10⁻² S/cm. Those films are useful as an electrode material or in batteries.

In a further process II) for producing the electrically conductive polymer compositions of the present invention, polymer b) such as poly-DDAP is contacted with evaporated pyrrole or can be sprayed with pyrrole.

In a further method III), the monomeric precursor(s) of polymer a) is polymerized in the presence of one of the above mentioned known polymers c). In this method, a cross-linked polymer b) having anions such as S₂O₈²⁻ is produced in situ by polymerizing the monomeric precursor(s) of polymer a) in the presence of an oxidating agent which contains polydentate anionic complexes having a redox potential sufficient for enabling oxidative polymerization of the monomeric precursor(s) of polymer a) and in the presence of a polymer c) which contains anions which are spontaneously exchangeable with the polydentate anionic complexes in the oxidating agent. Useful polymers c) and oxidating agents are described above. The monomeric precursor of polymer a) such as pyrrole, polymer c) such as poly(diallyldimethylammonium chloride) and an oxidating agent such as K₂S₂O₈ are diluted with a diluting agent such as water or aqueous methanol, preferably water.

The molar ratio between the monomeric precursor(s) of polymer a) to oxidating agent is preferably from 6:1 to 50:1, more preferably from 6:1 to 20:1. The ion exchange and the cross-linking of polymer c) and the polymerization of the monomeric precursor(s) of polymer a) is preferably carried out in the presence of a conducting salt as described above. The molar ratio between the monomeric precursor of polymer a) such as pyrrole and the conducting salt is preferably from 3:1 to 20:1, more preferably from 3:1 to 10:1. According to method III, polymer compositions of the present invention are preferably produced at a temperature between 15°C and 40°C, more preferably at about ambient temperature. The resulting suspension or solution of the electrically conductive polymer composition of the present invention can be applied to substrates. After drying, the produced coatings are highly scratch resistant and have a very good adhesion to the substrate. Coatings with an electrical conductivity of up to about 10⁻³ S/cm are obtainable according to this process.

The electrically conductive polymer compositions of the present invention are useful for many applications generally known for electrically conductive polypyrrole compositions. The use of the electrically conductive polymer composition as an electrode material is described below in greater detail. The electrically conductive polymer compositions of the present invention are preferably used for electroplating processes in which organic compounds are oxidized or reduced. Such organic compounds are preferably monomeric precursors of polymer a). For example, monomeric precursors of polymer a) such as pyrrole are preferably polymerized in the presence of an electrically conductive polymer composition of the present invention.

The electrically conductive polymer composition is preferably in the form of a coating on a substrate, but self-supporting films are also useful. The polymer composition is useful as an anode on which a film of an above mentioned polymer a) can be deposited by electrochemical oxidative polymerization of the monomeric precursor(s) of polymer a). When polypyrrole is deposited on an electrically conductive polymer composition of the present invention, generally an initial potential of 1 to 100 volts, preferably of 1 to 50 volts and most preferably of 2 to 25 volts is applied between the anode and the cathode. Known cathodes such as platinum electrodes can be used in conjunction with the aforementioned anodes.

The electrolyte preferably is an organic solvent, optionally mixed with water, in which conducting salts are quite soluble. Preferred examples are chlorinated hydrocarbons such as methylene chloride, propylene carbonate and most preferably acetonitrile. The organic solvents may be mixed with up to 50 weight percent, preferably with up to 25 weight percent water, based on the weight of the solvent mixture. Useful conducting salts are the same as those mentioned above. The monomeric precursor(s) of polymer a), such as pyrrole, and the conducting salts are generally present in the electrolyte in a molar concentration of from 0.001 to 5.

High electrically conductive polymer films having a coating of polymer a) are obtained according to the above described process. These films are useful as electrode materials or in batteries.

The present invention is further illustrated by the following examples which should not be construed to limit the invention. All percentages and parts are by weight unless otherwise mentioned. Unless otherwise mentioned, the electrical conductivity is determined by measuring the specific electrical surface resistivity (distance between the electrodes is one centimeter and the electric potential is 1.18 volt). The measurements have been carried out using a Fluke 8060A RMS multimeter. The determination of the electrical conductivity is as described by H.J. Mair, S. Roth, "Eletrisch leitende Kunststoffe", Carl Hauser Verlag München, Wien, 1986, pages 27-47 and literature cited therein.

A 1 percent aqueous solution of poly(diallyldimethylammoniumchloride) is added to a 1 percent aqeuous solution of (NH₄)₂S₂O₈. A white precipitate is produced which is filtered off.

### Example 1

1.8 g of a 13.5 percent aqueous solution of poly-(diallyldimethylammonium chloride), hereafter designated as poly-DADMAC is evenly applied to a substrate made of glass having a surface of 7.5 cm x 2.5 cm. The poly-DADMAC contains 13 weight percent monomer and 87 weight percent polymer. The average molecular weight of poly-DADMAC is 1,470,000 g/mol, the intrinsic viscosity is 2.16 dl/g. The coated substrate is put in 100 ml of an aqueous solution saturated with K₂S₂O₈. The poly-DADMAC solution is quickly solidified to a white film. The film is left for two hours in the K₂S₂O₈ solution, removed therefrom and then washed with water and methanol.

The produced film of poly(diallyldimethylammoniumperoxodisulphate), hereafter designated as poly-DDAP, which is fixed on the glass substrate is put in a 5 percent solution of pyrrole in cyclohexane. Polypyrrole is immediately produced resulting in the film turns black. After three hours the film is removed from the pyrrole/cyclohexane bath together with the glass substrate. Any remaining pyrrole which adheres to the film is carefully washed off in methanol. The film is dried at reduced pressure at room temperature. The dried film adheres excellently to the glass substrate and is highly scratch resistant. The specific electrical surface resistivity of the film is 5.7 x 10⁶ ohms.

### Example 2

A film of poly-DDAP on a glass substrate produced according to Example 1 is fixed in a glass container near the top which container has been purged with nitrogen. The glass container contains liquid pyrrole which is not in direct contact with the film. A few minutes after the container has been closed, the reaction between the film and the pyrrole gas phase occurs and the polymer film turns black. After two hours the film is removed from the container together with the glass substrate and any non-converted pyrrole is removed from the film with methanol and the film is dried. The specific electrical surface resistivity of the film is 5 x 10⁶ ohms.

### Example 3

A poly-DDAP film on a glass substrate is prepared as described in Example 1 and fixed in a glass container comprising liquid aniline as described in Example 2. The film and the glass substrate are left for about 20 hours in the closed container, then removed from the container and the film is then washed with methanol. The specific electrical surface resistivity of the film is 3 x 10⁶ ohms.

### Example 4

3.2 g of the poly-DADMAC solution of Example 1 is applied to a glass substrate and put into a bath containing 35 g of Na₂S₂O₈ salt in 120 ml of water whereby a solid white film is produced on the substrate. After 2 hours the film and the substrate are removed from the bath and the film is washed with water. The poly-DDAP film which has been obtained on the substrate is then put into a bath of 50 ml methanol and 100 ml water containing 13.6 g dissolved KHSO₄ and 12 ml dissolved pyrrole. After 5 hours the film is removed from the bath together with the glass substrate. The film adheres only partially to the substrate. Any salt adhering to the film is removed with water and the film is then washed with methanol.

The specific electrical surface resistivity of the film is 5 x 10³ ohms (the distance between the electrodes is 1 cm, the potential is 1.15 volts). The self-supporting, wet flexible film obtained is resistant to water and organic solvents.

### Example 5

Example 4 is repeated, however, NaBF₄ is used as a conducting salt instead of KHSO₄. The specific electrical surface resistivity of the film obtained is 4 x 10³ ohms.

### Example 6

Example 4 is repeated, however, KPF₆ is used as the conducting salt instead of KHSO₄. The specific electrical surface resistivity of the film obtained is 1 x 10⁴ ohms.

### Example 7

A poly-DDAP film on a glass substrate is produced as in Example 4, however a 10 percent aqueous solution of a monomer-free poly-DADMAC is used as a starting material rather than the poly-DADMAC solution used in Example 1. The produced poly-DDAP film on the substrate is placed into a 5 percent aqueous solution of the sodium salt of polystyrene sulphonic acid to which 8 vol. percent of pyrrole, based on the volume of water, has been added. The film is left in this bath for five hours and removed from the glass substrate. The specific electrical surface resistivity of the film obtained is 1.6 x 10³ ohms.

### Example 8

A poly-DDAP film on a glass substrate is produced as described in Example 7 and is placed into a solution of 12 g of NaBF₄ in 50 ml of methanol and 100 ml of water which has been mixed with 10 ml of aniline. The film is left for about 20 hours in the bath and then removed from the glass substrate. The specific electrical surface resistivity of the film obtained is 2.5 x 10³ ohms.

### Example 9

A poly-DDAP film on a glass substrate is produced as in Example 7 and is placed into a solution of 10 g of tetrabutylammonium hydrogensulphate in 100 ml of acetonitrile to which 12 ml of pyrrole has been added. After five hours the film, which adheres strongly to the substrate, is removed from the solution and then washed with water and then with methanol. The specific electrical surface resistivity of the film obtained is 4 x 10³ ohms.

### Example 10

80 parts of a 13.5 weight percent aqueous poly-DADMAC solution as described in Example 1 is diluted with 20 parts of water and mixed with 6.7 parts of pyrrole. The mixture is stirred for half an hour. 4.1 parts of NaHSO₄ and 4.7 parts of Na₂S₂O₈ in 30 parts of water is added while cooling to 15°C. The solution turns black and highly viscous. After having stirred for half an hour, a fine dispersion is obtained which is applied to a glass substrate. After drying, a black, highly adhesive and scratch resistant coating is obtained which has a specific electrical surface resistivity of 6 x 10² ohms.

### Example 11

50 ml of a poly-DADMAC solution is added dropwise to a 30 percent aqueous solution of Na₂S₂O₈ under stirring. The poly-DADMAC which is used has a polymer content of 88 percent, a monomer content of 12 percent, a viscosity of 3026 cPoise and an intrinsic viscosity of 1.71 dl/g. The polymer/peroxo derivative of poly-DADMAC forms quickly as a white precipitate. Stirring is continued for two hours, the precipitate is filtered off, washed with water and methanol and then completely dried at reduced pressure at ambient temperature.

Elementary analysis data indicates a completely ionically cross-linked product with a residual chlorine content of less than 0.08% (chlorine content of poly-DADMAC is 21.95 percent). C:39.74 percent, H:7.57 percent, N:5.9 percent, S:13.2 percent, Na: <0.2 percent.

4 parts of poly-DDAP which has been produced according to the process described above but not dried is pulverized and put into a solution of 12 parts of NaBF₄ in 100 parts of water. Methanol and pyrrole have been added to the water to obtain a volume ratio of water:methanol:pyrrole of 100:50:8. The solution is stirred for five hours. The obtained black material is filtered off, washed with water and then with methanol and dried. The product is pressed to a tablet under a pressure of 10 bar. The specific electrical surface resistivity of the tablet is 3 x 10³ ohms.

### Example 12

70 parts of a 65 percent aqueous solution of DADMAC is mixed with 6.3 parts of triallylamine and adjusted to a pH of 6 by addition of HCl. The solution is heated to 60°C and mixed with a solution of 0.115 parts of 2,2′-azobis-(2-amidinopropane)dihydrochloride, commercially available as WAKO-V-50 in 2 parts of water. The solution is stirred for three hours at 60°C and the highly viscous solution is diluted with 70 parts of water. An additional 0.10 parts of WAKO-V-50 in 2 parts of water is added and the solution is stirred for an additional 6 hours at 60°C.

After cooling, 6.5 g of the highly viscous reaction product is applied to a glass plate of 7.5 cm x 7.5 cm and left for two days. The film, which is formed after evaporation of the water, is removed from the glass plate. It has a good mechanical stability. The film has a thickness of 0.5 to 0.7 mm and is put into a 30 percent aqueous Na₂S₂O₈ solution. After two hours, the originally colourless film has become white and no portions of the film have been dissolved in the solution. The film is removed from the bath and washed with water and then with methanol.

The film is put in a suspension of 16 g of the sodium salt of p-styrene sulphonic acid in 100 ml of acetonitrile and 12 ml of pyrrole. After 10 hours a deeply black, wet film of extraordinary stability is obtained. The film is washed with methanol. The specific electrical surface resistivity of the film obtained is 5 x 10³ ohms.

### Example 13

2 g of poly(2-vinylpyridine) is dissolved in 5 ml of a 16 percent solution of HCl in water and converted to the hydro-chloride form. The viscous solution is applied to a glass substrate of 7.5 cm x 2.5 cm. The glass substrate coated with poly-(2-vinylpyridiniumhydrochloride) is put into 100 ml of a saturated solution of potassium peroxodisulphate in water.

After 15 minutes, the glass substrate having a sticky coating of poly(2-vinylpyridiniumperoxodisulphate) which adheres well to the substrate is washed with water and methanol and then put into a bath of cyclohexane containing 5 percent of pyrrole. The film turns black quickly. The coated glass substrate is removed from the bath after 15 minutes and washed with methanol. The specific electrical surface resistivity of the film obtained is 2 x 10⁴ ohms.

### Example 14

6 parts of a 4-vinylpyridine/styrene copolymer, having a styrene content of 10 percent, which is commercially available from Aldrich is dissolved in 35 parts of a 16 weight percent solution of HCl in water and converted to the hydrochloride form. The highly viscous solution is applied to a glass substrate and put into a 20 weight percent aqueous solution of (NH₄)₂S₂O₈. The polymer solution is immediately solidified into a white film. The glass substrate containing the film which adheres very well to the substrate is washed with water and methanol and then put into a bath of 100 ml of acetonitrile containing 12 g of NaBF₄ and 5 ml of pyrrole. The substrate containing the film is removed from the bath after 2 hours and washed with methanol. The specific electrical surface resistivity of the scratch resistant dry coating obtained is between 10³ and 10⁴ ohms.

### Example 15

6 parts of a 4-vinylpyridine/styrene copolymer, having a styrene content of 10 percent, which is commercially available from Aldrich is dissolved in 35 parts of a 16 weight percent solution of HCl in water and converted to the hydrochloride form. The highly viscous solution is applied to a glass substrate. The water is allowed to evaporate and a coating is obtained. The glass substrate containing the coating which adheres very well to the substrate is put in a 10 weight percent aqueous solution of (NH₄)₂S₂O₈. After 2 hours the transparent coating has been converted to a white tough, sticky material and no portions of the coating have been dissolved in the solution. The substrate containing the coating is put into a bath of a mixture of 100 ml of water and 50 ml of methanol containing 6.8 g of sodium dodecylhydrogensulfate and 6 ml of pyrrole. The polymer/peroxo-coating gradually becomes black after about 10 minutes. The substrate containing the black coating is removed from the bath after 5 hours. The coating can be pulled off the substrate in form of a film. The wet film is mechanically stable and flexible but tends to become somewhat brittle when completely dried. The surface of the film which has been exposed to the pyrrole/sodium dodecylhydrogensulfate solution is black and mat and has an electrical resistivity of about 10³ ohms. The back side of the film which has adhered to the substrate is black and glossy and has an electrical resistivity of 10⁶ ohms due to the fact that only pyrrole and not the bulky dodecylhydrogensulfate anion could penetrate the film.

### Example 16

5 parts of the 4-vinylpyridine/styrene copolymer described in Example 14 is dissolved in 100 parts of a 10 weight percent aqueous solution of HBF₄. The highly viscous solution is applied to a glass substrate and put into a 10 weight percent solution of (NH₄)₂S₂O₈. The polymer solution is solidified into a white film. The glass substrate containing the film is washed with water and put into a mixture or 100 ml of methanol and 60 ml of a 10 weight percent aqueous solution of HBF₄ containing 6 g of aniline. The substrate containing the black coating is removed from the mixture after 2 hours and washed with water and methanol. The specific electrical surface resistivity of the coating is 10³ ohms.

### Example 17

4 g of a copolymer produced from 50 mol percent DADMAC and 50 mol percent acrylamide (80 percent DADMAC conversion, molecular weight about 3,000,000) is dissolved in 200 ml of water. 25 ml of a 20 weight percent aqueous (NH₄)₂S₂O₈ solution is added at once to the stirred polymer solution. The polymer-peroxo derivative immediately precipitates from the solution in the form of a white gel-like material. 500 ml of acetone is added to the solution in order to complete the polymer precipitation. The product is separated by filtration and washed with 2 x 100 ml of acetone and additionally with 100 ml of acetonitrile. 8.6 g of the wet product is put into a solution of 5.4 g of NaBF₄ and 5 ml of pyrrole in 50 ml of acetonitrile. The polymer-peroxo derivative gradually turns black within 40 minutes. The product is washed with methanol, dried and pressed to a tablet. The specific electrical surface resistivity of the tablet is 4 x 10⁴ ohms.

### Example 18

### Use of a coating prepared from poly-DDAP and pyrrole as an electrode material

The scratch resistant and abrasive resistant coating prepared from poly-DDAP and pyrrole on a glass substrate of 7.5 cm x 2.5 cm produced according to Example 1 is used as an anode. A platinum electrode of 2 cm x 4 cm and 0.1 mm thickness is used as a cathode. The electrolyte consists of a 0.1 molar solution of tetrabutylammoniumtetrafluoroborate in 100 ml of acetonitrile which additionally contains pyrrole at a concentration of 1 molar. The electrodes are located in a closed container used for electrolysis at a distance of about 2.5 cm. The portion of the surface of the electrodes which is dipped into the solution is about 2 cm x 2.5 cm. A potential of 20 volts is applied for about 4 1/2 hours. The coated substrate is taken out of the bath, washed with methanol and dried under reduced pressure at ambient temperature. The electrical surface resistivity of the coating which has not been in direct contact with the electrolyte is 9 x 10⁴ ohms. The surface of the coating which has been located in the electrolyte is coated with a layer of anodically deposited polypyrrole, its electrical surface resistivity being 140 ohms. This portion of the coating can be removed from the substrate as a thin, black, mechanically stable, flexible film.

### Comparative Example

Example 18 is repeated, however a platinum electrode is used as an anode instead of a glass substrate coated with the coating produced from poly-DDAP and pyrrole. A second platinum electrode, which has been described in Example 16, is used as a cathode. The distance between the two electrodes and the type of electrolyte solution are the same as in example 16. The electrochemical deposition of pyrrole (concentration 1 molar) is carried out at a potential of 1.5 volts. After one hour, a portion of the platinum electrode is coated with a black film of polypyrrole. After an additional hour, the platinum electrode is removed from the bath and any conducting salt which still adheres to the deposited polypyrrole is removed with methanol. The coated electrode is then dried. It has an electrical surface resistivity of 32 ohms. It is not possible to remove polypyrrole produced under these conditions from the electrode in the form of a self-supporting film.

### Example 19

The mechanically stable wet poly-DDAP film prepared from poly-DADMAC and Na₂S₂O₈ according to Example 12 is used as an anode. A platinum electrode as described in Example 18 is used as an cathode. The electrolysis is carried out as described in Example 18, but 300 ml of acetonitril containing tetrabutylammoniumtetrafluoroborate at a concentration of 0.1 molar and pyrrole at a concentration of 0.5 molar is used as an electrolyte. As soon as the poly-DDAP film is dipped into the bath, it becomes black and conductive. The film is switched as an anode and a voltage of 4.5 volt is applied for about 10 minutes. The voltage is then decreased to 2.2 volt for 1.5 hours. The electrical conductivity of the film is 0.7 S/cm (measured by four-point measurement).

## Claims (Claims for the following Contracting State(s): AT, BE, CH, LI, DE, FR, GB, GR, IT, NL, SE)

1. An electrically conductive polymer composition characterized in that it is producible by oxidative polymerization of a homo- or copolymer a) of one or more substituted pyrroles, unsubstituted pyrrole, substituted thiophenes, unsubstituted thiophene, substituted anilines and/or unsubstituted aniline in the presence of a polymer b) containing ammonium, phosphonium or sulphonium groups in the polymer chain(s) and a polydentate anionic complex which has a redox potential sufficient for enabling oxidative polymerization of said pyrrole(s), thiophene(s) and/or aniline(s).

2. The polymer composition of Claim 1, characterized in that the polymer b) is cross-linked via polydentate, anionic metal complexes.

3. The polymer composition of Claim 2, characterized in that the polymer b) is cross-linked via anions of the type Cr₂O₇²⁻ , MnO₄⁻ or Fe(CN)₆³⁻.

4. The polymer composition of Claim 1, characterized in that the polymer b) is cross-linked via polydentate, anionic non-metallic complexes.

5. The polymer composition of Claim 4, characterized in that the polymer b) is cross-linked via anions of the type S₂O₈²⁻ or B₄O₇²⁻.

6. The polymer composition of any one of Claims 1 to 5, characterized in that the polymer b) is a homo- or copolymer of one or more monomers of Formula I 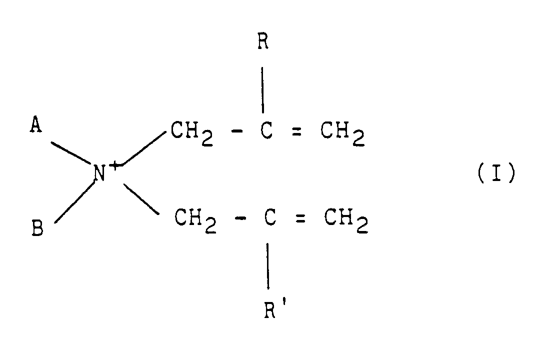 wherein
A and B are the same or different and represent an alkyl or phenyl radical, either unsubstituted or having one or more substituents which are not polymerizable in the presence of a free radical initiator; or
A and B together represent -CH₂-CH₂-, -CH(CH₃)-CH(CH₃)-, -CH=CH-CH=CH-, -CH=CH-CH=N-, or -CH=CH-N=CH-; and
R and R' are the same or different and represent an atom or group which is non-polymerizing, and the polymer is cross-linked via polydentate, anionic non-metallic or metal complexes.

7. The polymer composition of any one of Claims 1 to 6 in the form of a film.

8. A process for preparing an electrically conductive polymer composition which process comprises polymerizing one or more substituted pyrroles, unsubstituted pyrrole, substituted thiophenes, substituted thiophene, substituted anilines and/or unsubstituted aniline in the presence of a polymer b) containing ammonium, phosphonium or sulphonium groups in the polymer chain(s) and a polydentate anionic complex which has a redox potential sufficient for enabling oxidative polymerization of said pyrrole(s), thiophene(s) and/or aniline(s).

9. The process of Claim 8, characterized in that the polymer containing a polydentate anionic complex is utilized in the form of a film which is contacted with an electrolyte containing one or more aromatic compounds and a conducting salt and a potential of 1 to 100 volts is applied between the film and a cathode.

10. A process for preparing an electrically conductive polymer composition which process comprises polymerizing one or more substituted pyrroles, unsubstituted pyrrole, substituted thiophenes, unsubstituted thiophene, substituted anilines and/or unsubstituted aniline in the presence of an oxidizing agent containing a polydentate anionic complex which has a redox potential sufficient for enabling oxidative polymerization of said pyrrole(s), thiophene(s) and/or aniline(s), and in the presence of a polymer containing ammonium, phosphonium or sulphonium groups in the polymer chain(s) and anions which are spontaneously exchangeable with the polydentate anionic complex of the oxidizing agent
and before or during oxidative polymerization of said pyrrole(s), thiophene(s) and/or aniline(s) the anions in the polymer are at least partially exchanged with the polydentate anionic complex of the oxidizing agent whereby a polymer b) containing the polydentate anionic complex is produced.

11. Use of the electrically conductive polymer composition of any one of Claims 1 to 7 as an electrical conductor or semi-conductor, as an electrode material, in a solar cell, for the antistatic finishing of plastics or paper, as an electromagnetic membrane, in a heating film, for capacitive scanning or in a fuel cells.

12. An electrical cell or a heating element containing the electrically conductive polymer composition as claimed in any of Claims 1 to 7.

13. A polymer which is cross-linked via anions of the type S₂O₈²⁻ or B₄O₇²⁻.

14. The polymer of Claim 13, which is a cross-linked homo- or copolymer of one or more monomers of Formula I 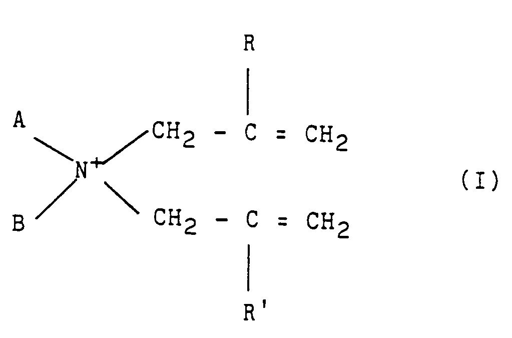 wherein
A and B are the same or different and represent an alkyl or phenyl radical, either unsubstituted or having one or more substituents which are not polymerizable in the presence of a free radical initiator; or
A and B together represent -CH₂-CH₂-, -CH(CH₃)-CH(CH₃)-, -CH=CH-CH=CH-, -CH=CH-CH=N-, or -CH=CH-N=CH-; and
R and R' are the same or different and represent an atom or group which is non-polymerizing.

## Claims (Claims for the following Contracting State(s): ES)

1. A process for preparing an electrically conductive polymer composition which process comprises polymerizing one or more substituted pyrroles, unsubstituted pyrrole, substituted thiophenes, substituted thiophene, substituted anilines and/or unsubstituted aniline in the presence of a polymer b) containing ammonium, phosphonium or sulphonium groups in the polymer chain(s) and a polydentate anionic complex which has a redox potential sufficient for enabling oxidative polymerization of said pyrrole(s), thiophene(s) and/or aniline(s).

2. The process of Claim 1, characterized in that the polymer containing a polydentate anionic complex is utilized in the form of a film which is contacted with an electrolyte containing one or more aromatic compounds and a conducting salt and a potential of 1 to 100 volts is applied between the film and a cathode.

3. A process for preparing an electrically conductive polymer composition which process comprises polymerizing one or more substituted pyrroles, unsubstituted pyrrole, substituted thiophenes, unsubstituted thiophene, substituted anilines and/or unsubstituted aniline in the presence of an oxidizing agent containing a polydentate anionic complex which has a redox potential sufficient for enabling oxidative polymerization of said pyrrole(s), thiophene(s) and/or aniline(s), and in the presence of a polymer containing ammonium, phosphonium or sulphonium groups in the polymer chain(s) and anions which are spontaneously exchangeable with the polydentate anionic complex of the oxidizing agent
and before or during oxidative polymerization of said pyrrole(s), thiophene(s) and/or aniline(s) the anions in the polymer are at least partially exchanged with the polydentate anionic complex of the oxidizing agent whereby a polymer b) containing the polydentate anionic complex is produced.

4. A process as claimed in any one of the preceding Claims, wherein the said aromatic compounds are polymerized in the presence of a conducting salt.

5. A process as claimed in any one of Claims 1 to 4, characterized in that the polymer b) is cross-linked via polydentate, anionic metal complexes.

6. A process as claimed in Claim 5, characterized in that the polymer b) is cross-linked via anions of the type Cr₂O₇²⁻ , MnO₄⁻ or Fe(CN)₆³⁻.

7. A process as claimed in any one of Claims 1 to 4, characterized in that the polymer b) is cross-linked via polydentate, anionic non-metallic complexes.

8. A process as claimed in Claim 7, characterized in that the polymer b) is cross-linked via anions of the type S₂O₈²⁻ or B₄O₇²⁻.

9. A process as claimed in any one of Claims 1 to 8, characterized in that the polymer b) is a homo- or copolymer of one or more monomers of Formula I 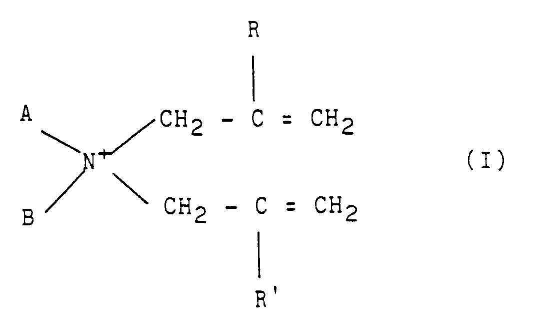 wherein
A and B are the same or different and represent an alkyl or phenyl radical, either unsubstituted or having one or more substituents which are not polymerizable in the presence of a free radical initiator; or
A and B together represent -CH₂-CH₂-, -CH(CH₃)-CH(CH₃)-, -CH=CH-CH=CH-, -CH=CH-CH=N-, or -CH=CH-N=CH-; and
R and R' are the same or different and represent an atom or group which is non-polymerizing, and the polymer is cross-linked via polydentate, anionic non-metallic or metal complexes.

10. The use of an electrically conductive polymer composition prepared in accordance with any one of Claims 1 to 9 as an electrical conductor or semi-conductor, as an electrode material, in a solar cell, for the antistatic finishing of plastics or paper, as an electromagnetic membrane, in a heating film, for capacitive scanning or in a fuel cell.

11. An electrical cell or a heating element containing electrically conductive polymer composition prepared in accordance with the process of any one of Claims 1 to 9.

## Patentansprüche (Patentansprüche für folgende(n) Vertragsstaat(en): AT, BE, CH, LI, DE, FR, GB, GR, IT, NL, SE)

1. Elektrisch leitfähige Polymerzusammensetzung,
dadurch gekennzeichnet, daß
sie herstellbar ist durch oxidative Polymerisation eines Homo- oder Co-Polymers a) eines oder mehrerer substituierter Pyrrole, unsubstituierten Pyrrols, substituierter Thiophene, unsubstituierten Thiophens, substituierter Aniline und/oder unsubstituierten Anilins in der Anwesenheit eines Polymers b), das Ammonium-, Phosphonium- oder Sulfoniumgruppen in der (den) Polymerkette(n) enthält, und eines anionischen Polydentatkomplexes, der ein ausreichendes Redoxpotential hat, um oxidative Polymerisation des (der) Pyrrol(e), Thiophen(e) und/oder Anilin(e) zu ermöglichen.

2. Polymerzusammensetzung nach Anspruch 1,
dadurch gekennzeichnet, daß
das Polymer b) über anionische metallische Polydentatkomplexe quervernetzt ist.

3. Polymerzusammensetzung nach Anspruch 2,
dadurch gekennzeichnet, daß
das Polymer b) über Anionen der Art Cr₂O₇²⁻, MnO₄⁻ oder Fe(CN)₆³⁻ quervernetzt ist.

4. Polymerzusammensetzung nach Anspruch 1,
dadurch gekennzeichnet, daß
das Polymer b) über anionische nichtmetallische Polydentatkomplexe quervernetzt ist.

5. Polymerzusammensetzung nach Anspruch 4,
dadurch gekennzeichnet, daß
das Polymer b) über Anionen der Art S₂O₈²⁻ oder B₄O₇²⁻ quervernetzt ist.

6. Polymerzusammensetzung nach einem der Ansprüche 1 bis 5,
dadurch gekennzeichnet, daß
das Polymer b) ein Homo- oder Co-Polymer einer oder mehrerer Monomere nach Formel I ist, 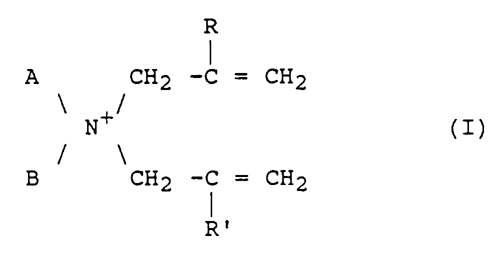 wobei
A und B gleich oder verschieden sind und einen Alkyl- oder Phenylrest darstellen, entweder unsubstituiert, oder mit einem oder mehreren Substituenten, die in der Anwesenheit eines Radikalstarters nicht polymerisierbar sind, oder
A und B zusammen -CH₂-CH₂-, -CH(CH₃)-CH(CH₃)-, -CH=CH-CH=CH-, -CH=CH-CH=N- oder -CH=CH-N=CH- darstellen, und
R und R' gleich oder verschieden sind und ein Atom oder eine nicht-polymerisierende Gruppe darstellen, und das Polymer über nichtmetallische oder metallische anionische Polydentatkomplexe quervernetzt ist.

7. Polymerzusammensetzung nach einem der Ansprüche 1 bis 6 in der Form eines Films.

8. Verfahren zum Herstellen einer elektrisch leitfähigen Polymerzusammensetzung, welches Verfahren umfaßt, Polymerisieren eines oder mehrerer substituierter Pyrrole, unsubstituierten Pyrrols, substituierter Thiophene, unsubstituierten Thiophens, substituierter Aniline und/oder unsubstituierten Anilins in der Anwesenheit eines Polymers b), das Ammonium-, Phosphonium- oder Sulfoniumgruppen in der (den) Polymerkette(n) enthält, und eines anionischen Polydentatkomplexes, der ein ausreichendes Redoxpotential hat, um oxidative Polymerisation des (der) Pyrrol(e), Thiophen(e) und/oder Anilin(e) zu ermöglichen.

9. Verfahren nach Anspruch 8,
dadurch gekennzeichnet daß
das einen anionischen Polydentatkomplex enthaltende Polymer in der Form eines Films verwendet wird, der mit einem eine oder mehrere aromatische Verbindungen enthaltenden und ein leitfähiges Salz enthaltenden Elektrolyten in Kontakt gebracht wird, und daß zwischen dem Film und einer Kathode eine Spannung von 1 bis 100 Volt angelegt wird.

10. Verfahren zum Herstellen einer elektrisch leitfähigen Polymerzusammensetzung, welches Verfahren umfaßt, Polymerisieren eines oder mehrerer substituierter Pyrrole, unsubstituierten Pyrrols, substituierter Thiophene, unsubstituierten Thiophens, substituierter Aniline und/oder unsubstituierten Anilins in der Anwesenheit eines einen anionischen Polydentatkomplex enthaltenden Oxidationsmittels, das ein ausreichendes Redoxpotential hat, um oxidative Polymerisation des (der) Pyrrol(e), Thiophen(e) und/oder Anilin(e) zu ermöglichen, und in der Anwesenheit eines Polymers, das Ammonium-, Phosphonium- oder Sulfoniumgruppen in der (den) Polymerkette(n) enthält, und von Anionen, die mit dem anionischen Polydentatkomplex des Oxidationsmittels spontan austauschbar sind, und wobei vor oder während der oxidativen Polymerisation des (der) Pyrrol(e), Thiophen(e) und/oder Anilin(e) die Anionen des Polymers mindestens teilweise mit dem anionischen Polydentatkomplex des Oxidationsmittels ausgetauscht werden, wodurch ein den anionischen Polydentatkomplex enthaltendes Polymer b) hergestellt wird.

11. Verwendung der elektrisch leitfähigen Polymerzusammensetzung nach einem der Ansprüche 1 bis 7 als elektrischen Leiter oder Halbleiter, als Elektrodenmaterial, in einer Solarzelle, zur antistatischen Endbearbeitung von Kunststoffen oder Papier, als elektromagnetische Membran, in einem Heizfilm, zum kapazitiven Scannen oder in Brennstoffzellen.

12. Elektrische Zelle oder Heizelement, enthaltend die elektrisch leitfähige Polymerzusammensetzung nach einem der Ansprüche 1 bis 7.

13. Polymer, welches über Anionen der Art S₂O₈²⁻ oder B₄O₇²⁻ quervernetzt ist.

14. Polymer nach Anspruch 13, welches ein quervernetztes Homo- oder Co-Polymer eines oder mehrerer Monomere nach Formel I ist, 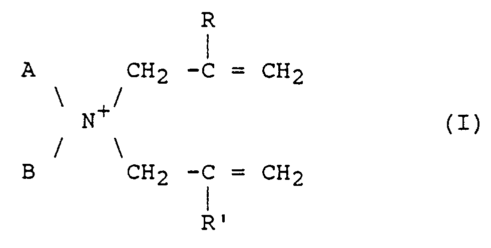 wobei
A und B gleich oder verschieden sind und einen Alkyl- oder Phenylrest darstellen, entweder unsubstituiert, oder mit einem oder mehreren Substituenten, die in der Anwesenheit eines Radikalstarters nicht polymerisierbar sind, oder
A und B zusammen -CH₂-CH₂-, -CH(CH₃)-CH(CH₃)-, -CH=CH-CH=CH-, -CH=CH-CH=N- oder -CH=CH-N=CH- darstellen, und
R und R' gleich oder verschieden sind und ein Atom oder eine nicht-polymerisierende Gruppe darstellen.

## Patentansprüche (Patentansprüche für folgende(n) Vertragsstaat(en): ES)

1. Verfahren zum Herstellen einer elektrisch leitfähigen Polymerzusammensetzung, welches Verfahren umfaßt, Polymerisieren eines oder mehrerer substituierter Pyrrole, unsubstituierten Pyrrols, substituierter Thiophene, unsubstituierten Thiophens, substituierter Aniline und/oder unsubstituierten Anilins in der Anwesenheit eines Polymers b), das Ammonium-, Phosphonium- oder Sulfoniumgruppen in der (den) Polymerkette(n) enthält, und eines anionischen Polydentatkomplexes, der ein ausreichendes Redoxpotential hat, um oxidative Polymerisation des (der) Pyrrol(e), Thiophen(e) und/oder Anilin(e) zu ermöglichen.

2. Verfahren nach Anspruch 1,
dadurch gekennzeichnet, daß
das einen anionischen Polydentatkomplex enthaltende Polymer in Form eines Films verwendet wird, der mit einem eine oder mehrere aromatische Verbindungen enthaltenden und ein leitfähiges Salz enthaltenden Elektrolyten in Kontakt gebracht wird, und daß zwischen dem Film und einer Kathode eine Spannung von 1 bis 100 Volt angelegt wird.

3. Verfahren zum Herstellen einer elektrisch leitfähigen Polymerzusammensetzung, welches Verfahren umfaßt, Polymerisieren eines oder mehrerer substituierter Pyrrole, unsubstituierten Pyrrols, substituierter Thiophene, unsubstituierten Thiophens, substituierter Aniline und/oder unsubstituierten Anilins in der Anwesenheit eines einen anionischen Polydentatkomplex enthaltenden Oxidationsmittels, das ein ausreichendes Redoxpotential hat, um oxidative Polymerisation des (der) Pyrrol(e), Thiophen(e) und/oder Anilin(e) zu ermöglichen, und in der Anwesenheit eines Polymers, das Ammonium-, Phosphonium- oder Sulfoniumgruppen in der (den) Polymerkette(n) enthält, und von Anionen, die mit dem anionischen Polydentatkomplex des Oxidationsmittel spontan austauschbar sind, und wobei vor oder während der oxidativen Polymerisation des (der) Pyrrol(e), Thiophen(e) und/oder Anilin(e) die Anionen des Polymers mindestens teilweise mit dem anionischen Polydentatkomplex des Oxidationsmittels ausgetauscht werden, wodurch ein den anionischen Polydentatkomplex enthaltendes Polymer b) hergestellt wird.

4. Verfahren nach einem der vorhergehenden Ansprüche, wobei die aromatischen Verbindungen in der Anwesenheit eines leitfähigen Salzes polymerisiert werden.

5. Verfahren nach einem der Ansprüche 1 bis 4,
dadurch gekennzeichnet, daß
das Polymer b) über anionische metallische Polydentatkomplexe quervernetzt wird.

6. Verfahren nach Anspruch 5,
dadurch gekennzeichnet, daß
das Polymer b) über Anionen der Art Cr₂O₇²⁻, MnO₄⁻ oder Fe(CN)₆³⁻ quervernetzt wird.

7. Verfahren nach einem der Ansprüche 1 bis 4,
dadurch gekennzeichnet, daß
das Polymer b) über anionische nichtmetallische Polydentatkomplexe quervernetzt wird.

8. Verfahren nach Anspruch 7,
dadurch gekennzeichnet, daß
das Polymer b) über Anionen der Art S₂O₈²⁻ oder B₄O₇²⁻ quervernetzt wird.

9. Verfahren nach einem der Ansprüche 1 bis 8,
dadurch gekennzeichnet, daß das Polymer b) ein Homo- oder Co-Polymer eines oder mehrerer Monomere nach Formel I ist, 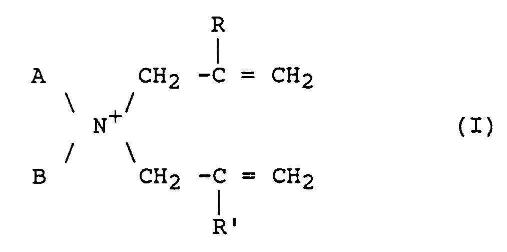 wobei
A und B gleich oder verschieden sind und einen Alkyl- oder Phenylrest darstellen, entweder unsubstituiert, oder mit einem oder mehreren Substituenten, die in der Anwesenheit eines Radikalstarters nicht polymerisierbar sind, oder
A und B zusammen -CH₂-CH₂-, -CH(CH₃)-CH(CH₃)-, -CH=CH-CH=CH-, -CH=CH-CH=N- oder -CH=CH-N=CH- darstellen, und
R und R' gleich oder verschieden sind und ein Atom oder eine nicht-polymerisierende Gruppe darstellen, und das Polymer über nichtmetallische oder metallische anionische Polydentatkomplexe quervernetzt wird.

10. Verwendung der nach einem der Ansprüche 1 bis 9 hergestellten elektrisch leitfähigen Polymerzusammensetzung als elektrischen Leiter oder Halbleiter, als Elektrodenmaterial, in einer Solarzelle, zur antistatischen Endbearbeitung von Kunststoffen oder Papier, als elektromagnetische Membran, in einem Heizfilm, zum kapazitiven Scannen oder in einer Brennstoffzelle.

11. Elektrische Zelle oder Heizelement, enthaltend eine nach dem Verfahren gemäß einem der Ansprüche 1 bis 9 hergestellte, elektrisch leitfähige Polymerzusammensetzung.

## Revendications (Revendications pour l'(les) Etat(s) contractant(s) suivant(s): AT, BE, CH, LI, DE, FR, GB, GR, IT, NL, SE)

1. Composition de polymère conducteur électrique caractérisée en ce qu'elle peut être préparée par polymérisation oxydante donnant un homo-ou copolymère a) à partir d'un ou plusieurs monomères de type pyrrole substitué, pyrrole non substitué, thiophène substitué, thiophène non substitué, aniline substitué et/ou aniline non substitué, en présence d'un polymère b) comportant dans la chaîne macromoléculaire des groupes ammonium, phosphonium ou sulfonium et d'un complexe anionique polydenté qui a un potentiel redox suffisant pour permettre la polymérisation oxydante desdits pyrrole(s), thiophène(s) et/ou aniline(s).

2. Composition de polymère conforme à la revendication 1, caractérisée en ce que le polymère b) est réticulé par les complexes métalliques anioniques polydentés.

3. Composition de polymère conforme à la revendication 2, caractérisée en ce que le polymère b) est réticulé par des anions de type Cr₂O₇²⁻, MnO₄⁻ ou Fe(CN)₆³⁻.

4. Composition de polymère conforme à la revendication 1, caractérisée en ce que le polymère b) est réticulé par des complexes non métalliques anioniques polydentés.

5. Composition de polymère conforme à la revendication 4, caractérisée en ce que le polymère b) est réticulé par des anions de type S₂O₈²⁻ ou B₄O₇²⁻.

6. Composition de polymère conforme à une quelconque des revendications 1 à 5, caractérisée en ce que le polymère b) est un homo- ou copolymère d'un ou de plusieurs monomères de formule I 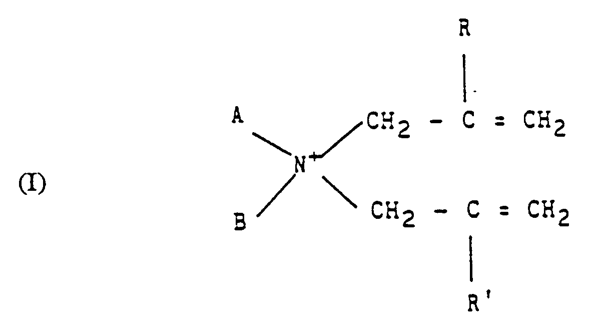 dans laquelle A et B sont identiques ou différents et représentent un radical alkyle ou phényle qui peut être non substitué ou porter un ou plusieurs substituants qui ne polymérisent pas en présence d'un amorceur radicalaire; ou
A et B pris ensemble représentent des groupes -CH₂-CH₂-, -CH(CH₃)-CH(CH₃)-, -CH=CH-CH=CH-, -CH=CH-CH=N ou -CH=CH-N=CH; et
R et R' sont identiques ou différents et représentent un atome ou un groupe non polymérisable et le polymère est réticulé par des complexes anioniques polydentés métalliques ou non métalliques.

7. Composition de polymère conforme à une quelconque des revendications 1 à 6 sous forme d'un film.

8. Procédé de préparation d'une composition de polymère conducteur électrique comprenant la polymérisation d'un ou de plusieurs monomères de type pyrrole substitué, pyrrole non substitué, thiophène substitué, thiophène non substitué, aniline substitué et/ou aniline non substitué, en présence d'un polymère b) contenant dans la chaîne macromoléculaire des groupes ammonium, phosphonium ou sulfonium et d'un complexe anionique polydenté qui a un potentiel rédox suffisant pour permettre la polymérisation oxydante desdits pyrrole(s), thiophène(s) et/ou aniline(s).

9. Procédé conforme à la revendication 8, caractérisé en ce que le polymère contenant un complexe anionique polydenté est utilisé sous forme d'un film qui est mis en contact avec un électrolyte contenant un ou plusieurs composés aromatiques et un sel conducteur et que l'on applique, entre le film et une cathode, un potentiel de 1 à 100 volts.

10. Procédé de préparation d'une composition de polymère conducteur électrique comprenant la polymérisation d'un ou de plusieurs monomères de type pyrrole substitué, pyrrole non substitué, thiophène substitué, thiophène non substitué, aniline substitué et/ou aniline non substitué en présence d'un agent oxydant contenant un complexe anionique polydenté qui a un potentiel rédox suffisant pour permettre la polymérisation oxydante desdits pyrrole(s), thiophène(s) et/ou aniline(s) et en présence d'un polymère contenant, dans la chaîne macromoléculaire, des groupes ammonium, phosphonium ou sulfonium et d'anions qui s'échangent spontanément avec le complexe anionique polydenté de l'agent oxydant
et dans lequel, avant ou pendant la polymérisation oxydante desdits pyrrole(s), thiophène(s) et/ou aniline(s), les anions dans le polymère sont au moins partiellement échangés contre le complexe anionique polydenté de l'agent oxydant ce qui donne un polymère b) contenant le complexe anionique polydenté.

11. Utilisation d'une composition de polymère conducteur électrique conforme à une quelconque des revendications 1 à 7 comme conducteur ou semi-conducteur électrique, comme matériau pour électrodes, dans une cellule solaire, pour la finition antistatique de matières plastiques ou de papier, comme membrane électromagnétique, dans un film chauffant, pour le balayage électrostatique ou dans une pile à combustible.

12. Pile électrique ou élément chauffant contenant la composition de polymère conducteur électrique conforme à une des revendications 1 à 7.

13. Polymère réticulé par des anions de type S₂O₈²⁻ ou B₄O₇²⁻.

14. Polymère conforme à la revendication 13, qui est un homo- ou copolymère réticulé comportant un ou plusieurs motifs monomères de formule I 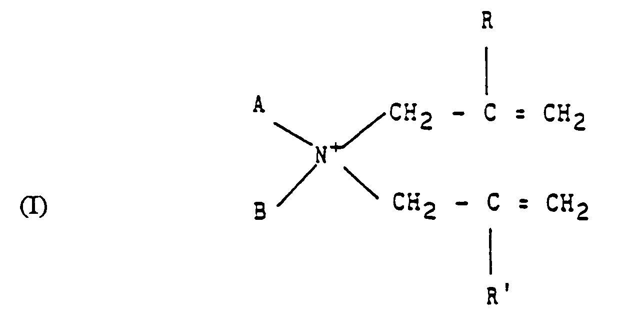 dans laquelle A et B sont identiques ou différents et représentent un radical alkyle ou phényle, non substitué ou portant un ou plusieurs substituants qui ne polymérisent pas en présence d'un amorceur radicalaire; ou
A et B pris ensemble représentent des groupes -CH₂-CH₂-, -CH(CH₃)-CH(CH₃)-, -CH=CH-CH=CH-, -CH=CH-CH=N ou -CH=CH-N=CH et
R et R' sont identiques ou différents et représentent un atome ou un groupe non polymérisable.

## Revendications (Revendications pour l'(les) Etat(s) contractant(s) suivant(s): ES)

1. Procédé de préparation d'une composition de polymère conducteur électrique comprenant la polymérisation d'un ou de plusieurs monomères de type pyrrole substitué, pyrrole non substitué, thiophène substitué, thiophène non substitué, aniline substitué et/ou aniline non substitué, en présence d'un polymère b) contenant dans la chaîne macromoléculaire des groupes ammonium, phosphonium ou sulfonium et d'un complexe anionique polydenté qui a un potentiel rédox suffisant pour permettre la polymérisation oxydante desdits pyrrole(s), thiophène(s) et/ou aniline(s).

2. Procédé conforme à la revendication 1, caractérisé en ce que le polymère contenant un complexe anionique polydenté est utilisé sous forme d'un film qui est mis en contact avec un électrolyte contenant un ou plusieurs composés aromatiques et un sel conducteur et que l'on applique, entre le film et une cathode, un potentiel de 1 à 100 volts.

3. Procédé de préparation d'une composition de polymère conducteur électrique comprenant la polymérisation d'un ou de plusieurs monomères de type pyrrole substitué, pyrrole non substitué, thiophène substitué, thiophène non substitué, aniline substitué et/ou aniline non substitué en présence d'un agent oxydant contenant un complexe anionique polydenté qui a un potentiel rédox suffisant pour permettre la polymérisation oxydante desdits pyrrole(s), thiophène(s) et/ou aniline(s) et en présence d'un polymère b) contenant, dans la chaîne macromoléculaire, des groupes ammonium, phosphonium ou sulfonium et d'anions qui s'échangent spontanément avec le complexe anionique polydenté de l'agent oxydant
et dans lequel, avant ou pendant la polymérisation oxydante desdits pyrrole(s), thiophène(s) et/ou aniline(s), les anions dans le polymère sont échangés au moins partiellement contre le complexe anionique polydenté de l'agent oxydant ce qui donne un polymère b) contenant le complexe anionique polydenté.

4. Procédé conforme à une quelconque des revendications précédentes, dans lequel lesdits composés aromatiques sont polymérisés en présence d'un sel conducteur.

5. Procédé conforme à une quelconque des revendications 1 à 4, caractérisé en ce que le polymère b) est réticulé par des complexes métalliques anioniques polydentés.

6. Procédé conforme à la revendication 5, caractérisé en ce que le polymère b) est réticulé par des anions de type Cr₂O₇²⁻, MnO₄⁻ ou Fe(CN)₆³⁻.

7. Procédé conforme à une quelconque des revendications 1 à 4, caractérisée en ce que le polymère b) est réticulé par des complexes non métalliques anioniques polydentés.

8. Procédé conforme à la revendication 7, caractérisé en ce que le polymère b) est réticulé par des anions de type S₂O₈²⁻ ou B₄O₇²⁻.

9. Procédé conforme à une quelconque des revendications 1 à 8, caractérisé en ce que le polymère b) est un homo- ou copolymère d'un ou de plusieurs motifs monomères de formule I 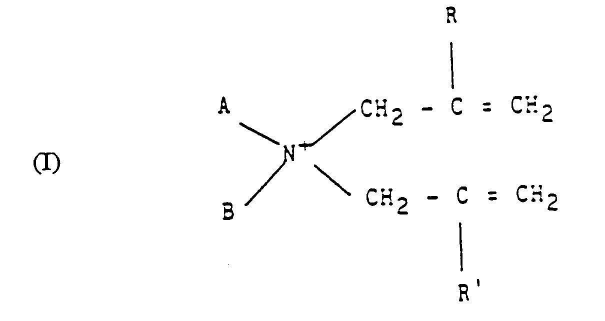 dans laquelle A et B sont identiques ou différents et représentent un radical alkyle ou phényle, non substitué ou pouvant porter un ou plusieurs substituants qui ne polymérisent pas en présence d'un amorceur radicalaire; ou
A et B pris ensemble représentent des groupes -CH₂-CH₂-, -CH(CH₃)-CH(CH₃)-, -CH=CH-CH=CH-, -CH=CH-CH=N ou -CH=CH-N=CH; et
R et R' sont identiques ou différents et représentent un atome ou un groupe non polymérisable et le polymère est réticulé par des complexes anioniques polydentés métalliques ou non métalliques.

10. Utilisation d'une composition de polymère conducteur électrique préparée conformément à une quelconque des revendications 1 à 9 comme conducteur ou semi-conducteur électrique, comme matériau pour électrodes, dans une cellule solaire, pour la finition antistatique de matières plastiques ou de papier, comme membrane électromagnétique, dans un film chauffant, pour le balayage électrostatique ou dans une pile à combustible.

11. Pile électrique ou élément chauffant contenant la composition de polymère conducteur électrique préparée conformément à une des revendications 1 à 9.
